Europäisches Patentamt

European Patent Office

Office européen des brevets

(19)

(11) Numéro de publication : **0 314 538 B1**

# (12) FASCICULE DE BREVET EUROPEEN

(45) Date de publication du fascicule du brevet :
**18.12.91 Bulletin 91/51**

(51) Int. Cl.$^5$ : **B31F 1/28, B29C 51/22**

(21) Numéro de dépôt : **88402544.6**

(22) Date de dépôt : **07.10.88**

(54) Cylindre cannelé pour une machine de fabrication de carton ondulé.

(30) Priorité : **23.10.87 FR 8714712**

(43) Date de publication de la demande :
**03.05.89 Bulletin 89/18**

(45) Mention de la délivrance du brevet :
**18.12.91 Bulletin 91/51**

(84) Etats contractants désignés :
**DE ES GB IT**

(56) Documents cités :
**EP-A- 0 034 906**
**FR-A- 2 154 516**
**US-A- 2 776 452**
**US-A- 2 936 158**
**US-A- 3 932 248**
**US-A- 3 947 206**

(73) Titulaire : **PAPETERIES ET CARTONNERIES LACAUX FRERES**
**6, Impasse Saint-Exupéry**
**F-87003 Limoges Cédex (FR)**

(72) Inventeur : **Lacaux, Hervé**
**Le Haut Marin**
**F-87920 Condat sur Vienne (FR)**

(74) Mandataire : **Kohn, Philippe et al**
**c/o CABINET LAVOIX 2, place d'Estienne d'Orves**
**F-75441 Paris Cédex 09 (FR)**

## Description

La présente invention a pour objet un cylindre pour une machine de fabrication de carton ondulé.

Une machine de fabrication de carton ondulé comporte au moins deux cylindres cannelés, engrenant l'un avec l'autre, entre lesquels on fait passer une feuille de papier pour y former des ondulations.

Un progrès technique important dans la conception de machines de fabrication de carton ondulé, communément appelées "onduleuses", a consisté à assurer le maintien de la feuille de papier subissant l'ondulation, non plus par des segments extérieurs aux cylindres d'ondulation cannelés, mais au moyen d'une source de dépression provoquant un phénomène de plaquage de la feuille de papier sur le cylindre par aspiration.

Il a ainsi été proposé dans le document FR-B-2348817 une machine de fabrication de carton ondulé dont un cylindre cannelé comporte une virole délimitant une chambre interne d'aspiration reliée en permanence à une source de dépression et percée d'une série de trous d'aspiration débouchant à la surface périphérique de la virole.

Si la solution proposée dans ce document est satisfaisante quant au maintien de la feuille de papier sur la surface périphérique externe de la virole par aspiration, elle présente néanmoins plusieurs inconvénients. Le cylindre onduleur inférieur comportant les moyens d'aspiration n'est pas équipé de moyens de chauffage permettant d'effectuer un thermo-formage correct des ondulations de la feuille de papier. Cet absence nécessite de prévoir que le cylindre onduleur supérieur soit parcouru, dans une portion interne creuse similaire à la chambre d'aspiration du cylindre onduleur inférieur, par de la vapeur surchauffée. La phase de chauffage de la feuille de papier n'est donc pas concomitante avec la phase mécanique de formage des ondulations. De plus ce document ne propose aucun moyen technique simple et efficace pur effectuer le raccordement de la chambre interne du cylindre inférieur d'ondulation avec une source de dépression, la représentation en coupe de celui-ci, figurant dans ce document, n'étant qu'un schéma permettant d'en illustrer le principe de fonctionnement.

Le document FR-B-2404709 décrit et représente une onduleuse dont le second rouleau d'ondulation, sur une demi-circonférence duquel s'enroule la feuille de papier, comporte une chambre interne de chauffage à l'intérieur de laquelle circule de la vapeur. Le système de maintien de la feuille de papier sur le cylindre cannelé, par aspiration, est constitué par des moyens extérieurs au cylindre comportant notamment un ensemble de parois latérales, frontales et arrière servant à délimiter une chambre externe d'aspiration entourant l'autre demi-circonférence du cylindre cannelé, les moyens d'aspiration comportant également des moyens de chauffage permettant d'éviter, des différences de dilatation entre les divers éléments constitutifs de l'ensemble. La solution proposée dans ce document est complexe et coûteuse, notamment en ce qu'elle nécessite de faire appel à de nombreux composants indépendants du cylindre qui doivent être agencés avec précision à la périphérie de celui-ci.

Le document FR-B-2465027 décrit et représente une onduleuse dont le cylindre inférieur cannelé comporte une chambre interne de chauffage à l'intérieur de laquelle circule de la vapeur saturée, délimitée par une virole cylindrique dont la surface périphérique externe est cannelée, un grand nombre de canaux longitudinaux étant percés dans le corps de la virole de manière à être régulièrement répartis sur toute la laize du cylindre, c'est-à-dire sur toute la longueur utile cannelée de ce dernier, et qui sont reliés à une source de dépression. Chaque canal longitudinal est relié à la surface périphérique externe cannelée de la virole par des trous axiaux d'un plus petit diamètre percés régulièrement le long de chaque canal.

Cette solution, bien qu'elle ait l'avantage de regrouper à l'intérieur du cylindre cannelé les deux fonctions de chauffage et d'aspiration de la feuille de papier, présente néanmoins de nombreux inconvénients. La connection de chaque canal longitudinal avec une source de dépression telle que par exemple une pompe à vide, est effectuée au moyen d'un secteur en forme de demi-cercle qui s'appuie sur un flanc de tranche de la virole et devant lequel passent successivement les canaux longitudinaux répartis sur une demi-circonférence du cylindre et qui fait fonction de distributeur rotatif de dépression. Cette conception nécessite d'utiliser une source de dépression très puissante et à grand débit car les canaux longitudinaux sont alternativement remis en communication avec l'air ambiant qui les remplit puis à nouveau avec la source de dépression.

Plus fondamentalement, cette conception dans laquelle les canaux d'aspiration sont disposés à la périphérie du cylindre et dans laquelle la source de chauffage est une chambre cylindrique interne de la virole, ne permet pas d'assurer un chauffage efficace de la feuille de papier en contact avec le cylindre.

En effet, la circulation d'air dans les canaux longitudinaux périphérique externe tend à refroidir le cylindre cannelé par opposition à l'action de chauffage provenant de la circulation de la vapeur dans la chambre interne, ce refroidissement ayant également pour conséquence de provoquer un phénomène de condensation très important d'eau à l'intérieur de la chambre interne de chauffage. L'eau condensée entraînée en rotation, forme une "virole annulaire d'eau" qui isole et provoque un gradient de température important entre la vapeur et la virole externe, elle-même réalisée en métal et nuisant au rendement de la conductibilité thermique de l'ensemble.

On connait par ailleurs du document US-A-2936158 un agencement de chauffage de cylindres du type comportant des canaux formés dans le corps du cylindre et dans lesquels circule en permanence un fluide caloporteur.

Afin de remedier aux inconvénients qui viennent d'être mentionnés, la présente invention propose un cylindre pour une machine de fabrication de carton ondulé comportant une virole délimitant une chambre interne d'aspiration reliée en permanence à une source de dépression et percée d'une série de trous d'aspiration débouchant à la surface périphérique de la virole, caractérisé en ce qu'il comporte une série de canaux axiaux, percés dans le corps de la virole, à l'intérieur desquels circule en permanence un fluide caloporteur de chauffage de la virole, le cylindre comportant en plus un nombre pair de canaux axiaux régulièrement répartis et reliés par paires pour constituer des circuits de chauffage formés chacun d'au moins deux canaux débouchant dont les extrémités situées d'un premier côté de la virole sont reliées entre elles et dont les extrémités opposées forment respectivement une entrée et une sortie du fluide caloporteur.

Selon d'autres caractéristiques de l'invention :

— le cylindre comporte un premier flasque latéral de fermeture de la virole délimitant des passages de liaison reliant entre elle des extrémités de deux canaux d'une paire, et un second flasque latéral comportant des canalisations d'alimentation et d'évacuation reliant respectivement, en parallèle, les entrées à une arrivée de fluide et les sorties à un départ de fluide.

Grâce à ces caractéristiques il est possible d'effectuer un chauffage idéal de la feuille de papier cannelée par le fluide caloporteur, tel que de la vapeur saturée, ou de l'huile, de préférence surchauffée qui parcourt la série de canaux ménagés dans l'épaisseur de la virole du cylindre, à peu de distance de la surface périphérique de ce dernier, sur laquelle sont formées les dentures et parallèlement à son axe, ces canaux étant reliés entre eux par les deux flasques latéraux usinés en conséquence afin de permettre que l'arrivée et le départ du fluide caloporteur se fassent d'un même côté du cylindre.

Selon d'autres caractéristiques :

— chaque paire de canaux est formée de deux canaux adjacents, les passages de liaison étant constitués par des secteurs de rainures circulaires creusés dans la face radiale annulaire d'extrémité de la virole et délimités par une face radiale annulaire en vis à vis du premier flasque;

— le premier flasque comporte un tourillon axial, permettant le montage du cylindre dans un palier correspondant, muni d'un alésage interne d'aspiration dont une extrémité débouche dans la chambre d'aspiration et dont l'autre extrémité peut, par exemple, être une extrémité borgne qui est reliée à la source de dépression par au moins un perçage radial traversant le tourillon et par un dispositif de joint étanche tournant agencé autour de la zone du tourillon où débouche le perçage radial ;

— l'extrémité libre du tourillon du premier flasque comporte des moyens d'entraînement en rotation du cylindre ;

— le second flasque comporte un tourillon, permettant le montage du cylindre dans un palier correspondant, muni de deux conduits internes concentriques reliant chacun respectivement les canalisations d'alimentation à l'arrivée de fluide, et les canalisations d'évacuation au départ de fluide ; et

— les canalisations d'alimentation peuvent avantageusement être constituées par une série de perçages sensiblement radiaux reliants les entrées de fluide à l'un des deux conduits concentriques, les canalisations d'évacuation étant, constituées par une série de perçages radiaux reliant les sorties de fluide à l'autre des deux conduits concentriques.

L'invention propose également une machine de fabrication de carton ondulé caractérisée en ce qu'elle comporte au moins un cylindre cannelé selon l'invention.

D'autres caractéristiques et avantages de l'invention apparaîtront à la lecture de la description détaillée qui va suivre pour la compréhension de laquelle on se reportera aux dessins annexés dans lesquels :

— la figure 1 est une vue extérieure simplifiée d'un cylindre selon l'invention ;

— les figures 2a et 2b sont les deux parties d'une vue en coupe axiale, selon la ligne 1-1 de la figure 3, du cylindre de la figure 1 ;

— la figure 3 est une vue en coupe selon la ligne 3-3 de la figure 2a ;

— la figure 4 est une vue en coupe selon la ligne 4-4 de la figure 2a ;

— la figure 5 est une vue en coupe selon la ligne 5-5 de la figure 2b ; et

— la figure 6 est un schéma montrant le fonctionnement d'une machine de fabrication de carton ondulé comportant au moins un cylindre cannelé selon les figures 1 à 5.

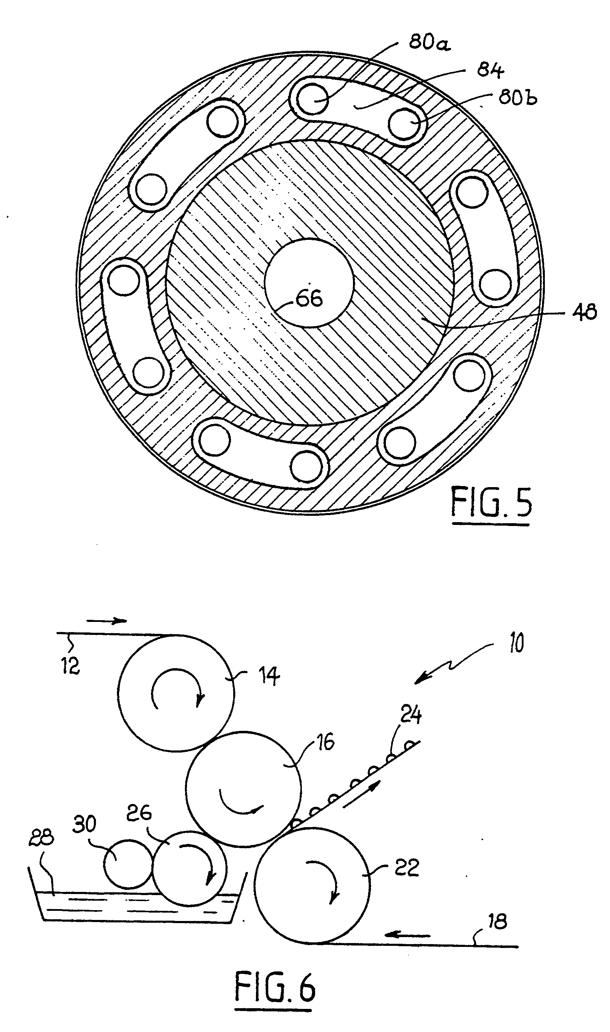

On a représenté à la figure 6, de manière schématique, une onduleuse simple-face classique dans laquelle le papier cannelure 12 est ondulé par passage entre deux cylindres cannelés 14 et 16 placés l'un au-dessus de l'autre, puis collé sur un papier couverture 18 entre le cylindre cannelé inférieur 16 et un cylindre lisse 22, pour sortir finalement de la machine sous forme d'une bande de carton ondulé simple-face 24. Le papier cannelure reçoit la colle par un cylindre 26 qui trempe dans un bac de colle 28. L'épaisseur de colle déposée sur le papier est réglée par l'intervalle existant entre le cylindre 26 et un cylindre auxiliaire 30.

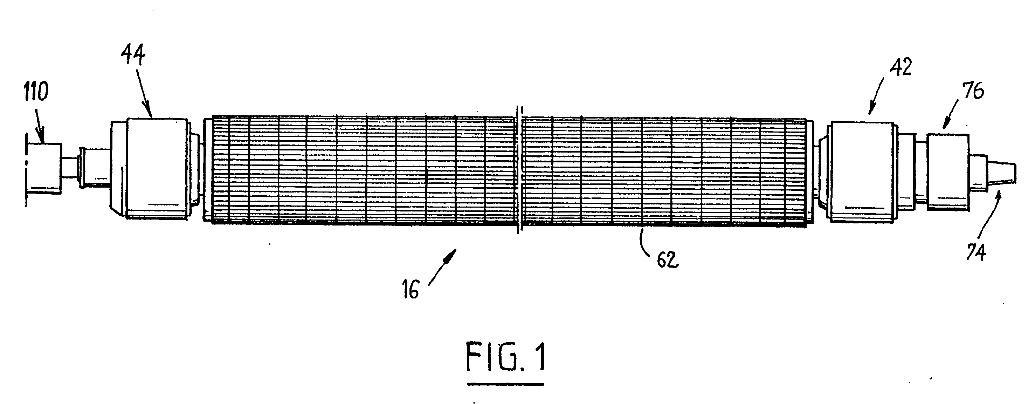

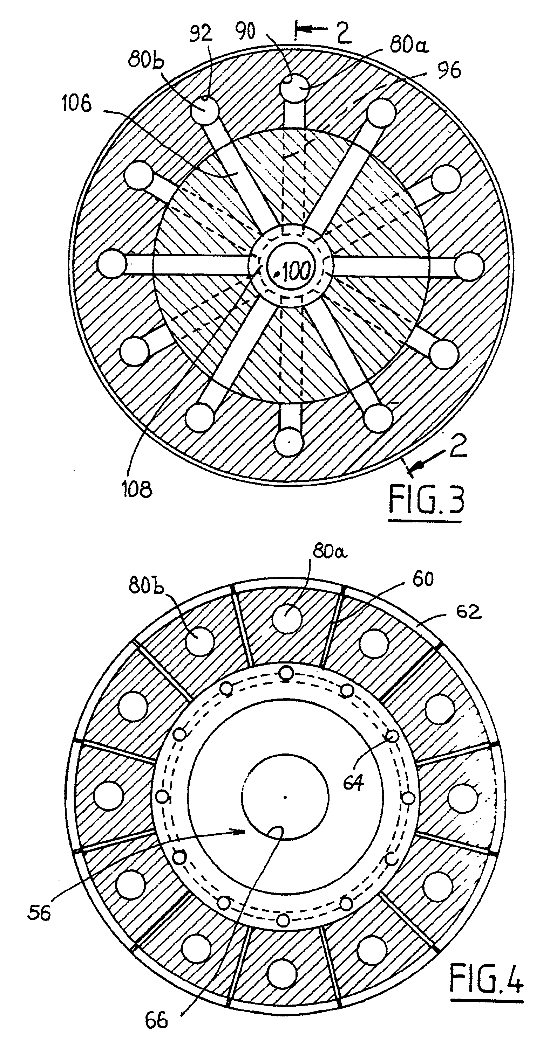

On a représenté aux figures 1 à 5 un cylindre cannelé, tel que le cylindre cannelé inférieur 16 de la figure 6, réalisé conformément aux enseignements de l'invention.

Le cylindre 16 est pour l'essentiel constitué par une virole cylindrique 32 aux extrémités de laquelle sont montés un premier flasque de fermeture 34 et un second flasque de fermeture 36. Les flasques de fermeture 34 et 36 se prolongent chacun axialement par un tourillon 38, 40 respectivement, permettant le montage à rotation du cylindre 16 dans des paliers correspondants 42 et 44.

La virole 32 comporte un alésage cylindrique interne 46 dans lequel sont emmanchés les deux prolongements cylindriques en vis-à-vis 48 et 50 des flasques latéraux 34 et 36 respectivement. Les faces radiales planes en vis-à-vis 52 et 54 des prolongements cylindriques 48 et 50 délimitent, avec la surface de l'alésage 46, une chambre interne d'aspiration 56 du cylindre cannelé 16.

La chambre interne d'aspiration 56 est reliée à la surface cylindrique périphérique 58 de la virole 32 par douze séries, réparties angulairement autour de l'axe X-X du cylindre, de trous radiaux d'aspiration 60. Chaque série de trous 60 comporte plusieurs trous radiaux, alignés selon une génératrice axiale, et dont chacun débouche dans une saignée annulaire correspondante 62 de la surface périphérique 58 qu'il relie à la chambre interne d'aspiration 56, soit directement, soit au moyen de conduits axiaux 64 formés dans les prolongements cylindriques 48 et 50.

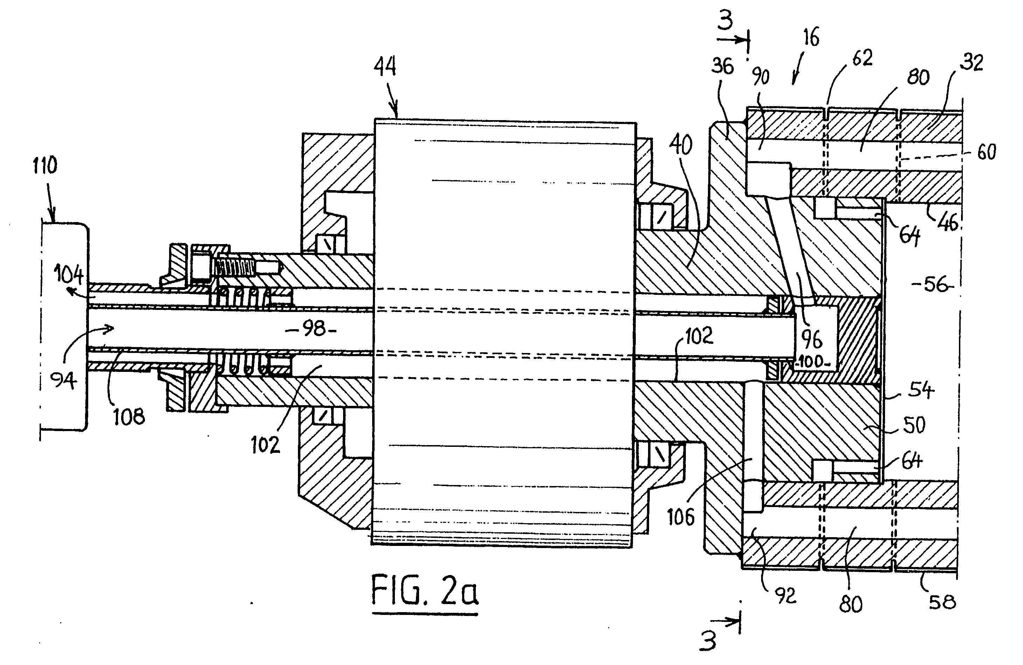

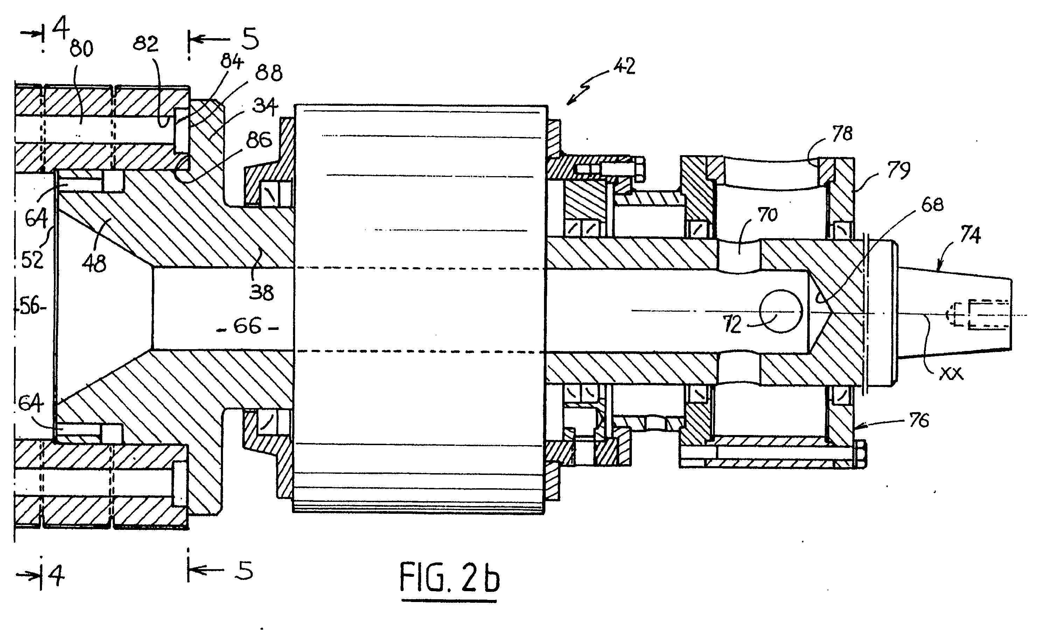

Comme on peut le voir à la figure 2b, le flasque 34 et son tourillon cylindrique étagé 38 comportent un alésage interne d'aspiration 66 dont une extrémité, à gauche en considérant la figure, débouche dans la chambre interne d'aspiration 56, et dont l'autre extrémité borgne 68 est reliée à une source de dépression non représentée. Dans ce but, il est prévu deux perçages radiaux débouchant 70 et 72 formés dans une zone du tourillon 38 proche de son extrémité libre 74, qui mettent en communication l'alésage interne d'aspiration 66 avec un dispositif de joint étanche tournant 76 dont un orifice 78 du boîtier fixe 79 est relié à la source de dépression. Comme on peut le constater à la figure 2b, l'extrémité libre 74 du tourillon 38 est prévue pour recevoir des moyens d'entraînement en rotation du cylindre cannelé 16.

Conformément à l'invention, la virole 32 comporte une série de canaux axiaux 80, réalisés par perçage dans le corps de la virole 32 et à l'intérieur desquels circule en permanence un fluide caloporteur de chauffage de la virole 32 tel que par exemple de la vapeur surchauffée.

Les canaux axiaux 80 sont en nombre pair et sont angulairement répartis autour de l'axe X-X du cylindre 16. Dans le mode de réalisation représenté aux figures, les canaux 80 sont au nombre de douze et sont reliés entre eux par paires pour constituer des circuits de chauffage formés chacun de deux canaux 80a et 80b. Les extrémités latérales de droite, en considérant la figure 2b, de deux canaux adjacents 80a et 80b sont reliées entre elles par un passage de liaison 84 constitué par un secteur de rainure circulaire creusé dans la face radiale d'extrémité 86 de la virole 32 et qui sont délimités latéralement par la face radiale annulaire en vis-à-vis 88 du premier flasque de fermeture 34.

L'extrémité latérale de gauche du canal 80a constitue une entrée du fluide caloporteur 90 tandis que l'extrémité latérale de gauche du canal adjacent 80b constitue une sortie 92 du fluide.

Les six entrées de fluide 90 des six canaux 80a sont reliées en parallèle à une arrivée 94 de fluide caloporteur au moyen de six canalisations d'alimentation 96 qui débouchent dans un premier conduit interne 98 du tourillon 40 du deuxième flasque 36 délimité par un tube 108 monté coaxialement dans le tourillon.

Chaque canalisation d'alimentation 96 est constituée par un perçage sensiblement radial s'étendant, à travers le prolongement cylindrique 50, depuis une entrée 90 pour déboucher dans une chambre d'arrivée du fluide 100 qui est reliée à l'arrivée 94 par le conduit interne d'alimentation 98.

Un second conduit 102, concentrique annulaire et entourant le conduit interne d'alimentation 98 est agencé dans le tourillon 40, et relie les sorties 92 des canaux axiaux 80b au départ 104 du fluide caloporteur. Cette liaison est assurée par des canalisations d'évacuation 106 constitués chacune par un perçage radial s'étendant depuis la sortie 92 jusqu'au conduit l'alésage concentrique externe d'évacuation 102 du tourillon 40.

L'arrivée de fluide caloporteur 94 et le départ 104 sont reliés à une source chaude non représentée, au moyen d'un dispositif classique de raccordement étanche et tournant 110.

La structure du cylindre cannelé 16 conforme à l'invention qui vient d'être décrite permet d'assurer un chauffage du cylindre de très grande efficacité et qui pallie les inconvénients des systèmes connus, notamment en évitant un trop fort phénomène de condensation de la vapeur saturée, du fait de la proximité des canaux de vapeur avec la surface cannelée, et de la très grande vitesse de circulation de la vapeur tout au long de ces canaux.

Dans une machine de fabrication de carton ondulé, il est possible de prévoir le montage en série des alimentations en fluide caloporteur des cylindres, c'est-à-dire de prévoir que la vapeur sortant du cylindre principal 16 selon l'invention est réinjectée dans les autres cylindres cannelé et lisse, par exemple au travers d'une enceinte extérieure faisant office de pot de condensation ; de même la sortie de vapeur et d'eau condensée de ces derniers cylindres peut avantageusement être raccordée à l'alimentation d'un cylindre de préchauffage du papier de cannelure ou de couverture, ceci afin d'obtenir, par suite du débit important ainsi utilisé, la plus grande vitesse possible de circulation de la vapeur tout au long des conduits et passages formés dans l'épaisseur du cylindre 16 objet de l'invention.

La conception selon l'invention permet également de réduire la chute de température, couramment observée aux deux extrémités de la partie active des cylindres cannelés qui est dûe à la longueur forcément importante d'emmanchement des tourillons de cylindre, grâce aux canaux de chauffage débouchants 80.

A température de chauffage égale, la conception du cylindre selon l'invention permet de réaliser une très importante économie de production de vapeur.

La machine représentée à la figure 6 doit être complètée par des plaques de couverture, du type de celles décrites et représentées dans le document FR-B-2348817 qui viennent en butée de manière étanche dans les saignées annulaires 62 dans la zone de celles-ci qui n'est pas recouverte par la feuille.

En variante, les canaux axiaux formant un circuit de chauffage peuvent être constitués chacun d'un nombre pair de canaux 80 supérieur à 2.

## Revendications

1. Cylindre (16) pour une machine (10) de fabrication de carton ondulé comportant une virole (32) délimitant une chambre interne d'aspiration (56) reliée en permanence à une source de dépression et percée d'une série de trous radiaux d'aspiration (60) débouchant à la surface périphérique (58) de la virole, caractérisé en ce qu'il comporte une série de canaux axiaux (80), percés dans le corps de la virole (32), à l'intérieur desquels circule en permanence un fluide caloporteur de chauffage de la virole, un nombre pair de canaux axiaux (80) étant régulièrement répartis et reliés par paires (80a, 80b) pour constituer des circuits de chauffage formés chacun d'au moins deux canaux débouchant dont les extrémités (82) situées d'un premier côté de la virole sont reliées entre elles et dont les extrémités opposées forment respectivement une entrée (90) et une sortie (92) du fluide caloporteur.

2. Cylindre selon la revendication 1 caractérisé en ce qu'il comporte deux flasques latéraux de fermeture de la virole, un premier flasque (34) délimitant des passages de liaison (84) reliant entre elles lesdites extrémités (82) de canaux (80a, 80b) d'une paire, et un second flasque (36) comportant des canalisations d'alimentation (96) et d'évacuation (106) reliant respectivement, en parallèle, lesdites entrées (90) à une arrivée (94) de fluide et lesdites sorties (92) à un départ (104) de fluide caloporteur.

3. Cylindre selon la revendication 2 caractérisé en ce que chaque paire de canaux est formée de deux canaux adjacents (80a, 80b), et en ce que les passages de liaison (84) sont constitués par des secteurs de rainures circulaires creusés dans la face radiale annulaire d'extrémité (84) de la virole et délimités par une face radiale annulaire (88) en vis-à-vis du premier flasque (34).

4. Cylindre selon l'une des revendications 2 ou 3 caractérisé en ce que le premier flasque (34) comporte un tourillon axial (38), permettant le montage du cylindre dans un palier correspondant (42), muni d'un alésage interne d'aspiration (66) dont une extrémité débouche dans la chambre d'aspiration (56) et dont l'autre extrémité (68) est reliée à la source de dépression.

5. Cylindre selon la revendication 4 caractérisé en ce que ladite autre extrémité de l'alésage d'aspiration (66) est une extrémité borgne (68) qui est reliée à la source de dépression par au moins un perçage radial (70, 72) traversant le tourillon (38) et par un dispositif de joint étanche tournant (70) agencé autour de la zone du tourillon où débouche ledit perçage radial.

6. Cylindre selon l'une des revendications 4 ou 5 caractérisé en ce que l'extrémité libre (74) du tourillon (38) du premier flasque (34) comporte des moyens d'entrainement en rotation du cylindre (16).

7. Cylindre selon la revendication 2 caractérisé en ce que le second flasque (36) comporte un tourillon (40), permettant le montage du cylindre dans un palier correspondant (44), muni de deux conduits internes concentriques (98, 102) reliant chacun respectivement les canalisations d'alimentation à l'arrivée (94) de fluide, et les canalisations d'évacuation au départ (104) de fluide.

8. Cylindre selon la revendication 7 caractérisé en ce que les canalisations d'alimentation (96) sont constituées par une série de perçages sensiblement radiaux reliant les entrées de fluide (90) à l'un (98) des deux conduits concentriques, et en ce que les canalisations d'évacuation (106) sont constituées par une série de perçages radiaux reliant les sorties (92) de fluide à l'autre (102) desdits deux conduits concentriques.

9. Machine de fabrication de carton ondulé (10) caractérisée en ce qu'elle comporte au moins un cylindre (16) selon l'une quelconque des revendications précédentes.

## Patentansprüche

1. Zylinder (16) für eine Maschine (10) zur Wellpappenherstellung mit einem Ring (32), der eine innere Ansaugkammer (56) begrenzt, die permanent mit einer Unterdruckquelle verbunden ist und die von einer Reihe von radialen Ansauglöchern (60) durchstoßen wird, die an der peripheren Oberfläche (58) des Rings münden, dadurch gekennzeichnet, daß er umfaßt : eine Reihe von axialen Kanälen (80), die in den Körper des Rings (32) gestoßen sind, in deren Inneren permanent ein Wärmetransportfluid zum Aufwärmen des Rings zirkuliert, wobei eine gerade Anzahl von axialen Kanälen (80) regelmäßig aufgeteilt und in Paaren (80a, 80b) verbunden ist, um Heizkreisläufe zu bilden, die jeweils aus wenigstens zwei einmündenden Kanälen bestehen, deren Enden (82), die auf einer ersten Seite des Rings angeordnet sind, untereinander verbunden sind und deren gegenüberliegende Enden jeweils einen Eingang (90) und einen Ausgang (92) für das Wärmetransportfluid bilden.

2. Zylinder nach Anspruch 1, dadurch gekennzeichnet, daß er zwei seitliche Verschlußflansche für den Ring besitzt, wobei ein erster Flansch (34) Verbindungsdurchgänge (84), die untereinander die Enden (82) der Kanäle (80a, 80b) eines Paares verbinden, begrenzt und ein zweiter Flansch (36) Versorgungskanäle (96) und Entsorgungskanäle (106) aufweist, die jeweils parallel die Eingänge (90) mit einer Fluidzufuhr (94) und die Ausgänge (92) mit einer Wärmetransportfluidabfuhr verbinden.

3. Zylinder nach Anspruch 2, dadurch gekennzeichnet, daß jedes Kanalpaar aus zwei benachbarten Kanälen (80a, 80b) besteht und daß die Verbindungsdurchgänge (84) aus beschnitten von zirkularen Riffeln bestehen, die in die radiale, ringförmige Endfläche (84) des Rings gefräst sind und von einer radialen, ringförmigen Fläche (88) gegenüber dem ersten Flansch (34) begrenzt werden.

4. Zylinder nach einem der Ansprüche 2 oder 3, dadurch gekennzeichnet, daß der erste Flansch (34) einen axialen Lagerzapfen (38) aufweist, der die Montage des Zylinders in ein entsprechendes Lager (42) erlaubt und der mit einer inneren Ansaugbohrung (66) versehen ist, von der ein Ende in die Ansaugkammer (56) mündet und deren anderes Ende (68) mit der Unterdruckquelle verbunden ist.

5. Zylinder nach Anspruch 4, dadurch gekennzeichnet, daß das andere Ende der Ansaugbohrung (66) ein Blindende ist, das mit der Unterdruckquelle über wenigstens eine radiale Bohrung (70, 72), die den Lagerzapfen (38) quert, und über eine dichte, sich drehende Verbindungsvorrichtung (70) verbunden ist, die um den Bereich des Lagerzapfens bewegt wird, wo die radiale Bohrung mündet.

6. Zylinder nach einem der Ansprüche 4 oder 5, dadurch gekennzeichnet, daß das freie Ende (74) des Lagerzapfens (38) des ersten Flanschs Vorrichtungen zum In-Drehung-Bringen des Zylinders (16) umfaßt.

7. Zylinder nach Anspruch 2, dadurch gekennzeichnet, daß der zweite Flansch (36) einen Lagerzapfen (40) aufweist, der die Montage des Zylinders in ein entsprechendes Lager (44) erlaubt und der mit zwei konzentrischen, inneren Röhren (98, 102) versehen ist, die jeweils die Versorgungskanäle mit der Fluidzufuhr (94) und die Entsorgungskanäle mit der Fluidabfuhr (104) verbinden.

8. Zylinder nach Anspruch 7, dadurch gekennzeichnet, daß die Versorgungskanäle (96) aus einer Reihe von im wesentlichen radialen Bohrungen bestehen, die die Fluideingänge (90) mit einer (98) der beiden konzentrischen Röhren verbinden, und daß die Entsorgungskanäle (106) aus einer Reihe von radialen Bohrungen bestehen, die die Fluidausgänge (92) mit der anderen (102) der beiden konzentrischen Röhren verbinden.

9. Maschine zur Herstellung von Wellpappe (10), dadurch gekennzeichnet, daß sie wenigstens einen Zylinder (16) nach einem der vorhergehenden Ansprüche umfaßt.

## Claims

1. Roll (16) for a machine (10) for manufacturing corrugated board comprising a shell (32) defining an inner suction chamber (56) permanently connected to a vacuum source and provided with a series of radial suction apertures (60) opening onto the peripheral surface (58) of the shell, characterised in that, it comprises a series of axial ducts (80) provided in the body of the shell (32), in which a heat-carrying fluid for heating the shell permanently circulates, an even number of axial ducts (80) being evenly spaced apart and connected in pairs (80a, 80b) so as to form heating circuits each consisting of at least two ducts whose ends (82) located at a first end of the shell are interconnected whilst their opposite ends, respectively, form an inlet (90) and outlet (92) for the heat-carrying fluid.

2. A roll according to claim 1, characterised in that it comprises two end side walls for closing the shell, a first side wall (34) defining connecting passages (84) interconnecting said ends (82) of the ducts (80a, 80b) of a pair, and a second side wall (36) comprising supply (96) and discharge pipes (106) respectively connecting, in parallel, said inlets (90) and discharge pipes (106) respectively connecting, in parallel, said inlets (90) to a heat-carrying fluid supply (94) and said outlets (92) to a heat-carrying fluid discharge (104).

3. A roll according to claim 2, characterised in that each pair of ducts is formed by two adjacent ducts (80a, 80b) and the connecting passages (84) consist of circular groove sectors forms in the annular radial end face (84) of the shell and defined by a confronting annular radial face in the first side wall (34).

4. A roll according to claim 2 or 3, characterised in that the first side wall (34) comprises an axial journal (38), enabling the roll to be mounted in a corresponding bearing, provided with an inner suction bore (66) having one end opening into the suction chamber (56) and the other end (68) connected to the vacuum source.

5. A roll according to claim 4, characterised in that the other end of the suction bore (66) is a blind end (68) which is connected to the vacuum source through at least one radial aperture (70, 72) extending through the journal (38) and a rotating sealed joint device (70) arranged around the region of the journal onto which said radial aperture opens.

6. A roll according to claim 4 or 5, characterised in that the free end (74) of the journal (38) of the first side wall (34) comprises means for rotationally driving the roll (16).

7. A roll according to claim 2, characterised in that the second side wall (36) comprises a journal (40) enabling the roll to be mounted in a corresponding bearing (44), provided with two concentric inner conduits (98, 102) each respectively connecting the supply pipes to the fluid inlet (94) and the fluid discharge pipes to the fluid outlet (104).

8. A roll according to claim 7, characterised in that the supply pipes (96) are made up of a series of substantially radial passages connecting the fluid inlets (90) to one (98) of the two concentric conduits, and the discharge pipes are made up of a series of radial passages connecting the fluid outlets (92) to the other (102) of said two concentric conduits.

9. A machine for manufacturing corrugated board (10), characterised in that it comprises at least one roll (16) according to any one of the preceding claims.

FIG. 1

EP 0 314 538 B1

FIG. 2a

## FIG. 2b

EP 0 314 538 B1

FIG.3

FIG.4

FIG.5

FIG.6